# EUROPEAN PATENT SPECIFICATION

(11) **EP 1 453 260 B1**
(45) Date of publication and mention of the grant of the patent: **12.07.2006**
(21) Application number: 04251083.4
(22) Date of filing: 26.02.2004
(51) Int. Cl.: H04L 12/56

(54) **A method for providing services with guaranteed quality of service in IP access network**
Verfahren zum Bereitstellen von Diensten mit garantierter Dienstqualität in einem IP-Zugangsnetz
Procédé pour fournir des services avec une qualité de service garantie dans un réseau à accès IP

(30) Priority: 26.02.2003 CN 03106929
(43) Date of publication of application: 01.09.2004
(73) Proprietor: Huawei Technologies Co., Ltd., 518129 Longang District, Shenzehen (CN)
(72) Inventor: Quing, Wu, Longgang District, Shenzhen 518129 (CN)
(74) Representative: Mounteney, Simon James

(56) References cited:
- WO-A-02/14979
- US-A1- 2002 087 699
- US-A1- 2003 007 622

## Description

### Field of the Technology

The invention relates to network access technology, more particularly to a method for providing services with guaranteed Quality of Service (QoS) in an Internet Protocol (IP) access network.

### Background of the Invention

At present, IP network of telecommunication service provider can only provide data services as possible. Along with the number of broadband network subscribers increases, the service requirements on IP network are getting more, such as Voice over IP (VoIP) and videoconference etc. These real-time services have strict requirements for QoS.

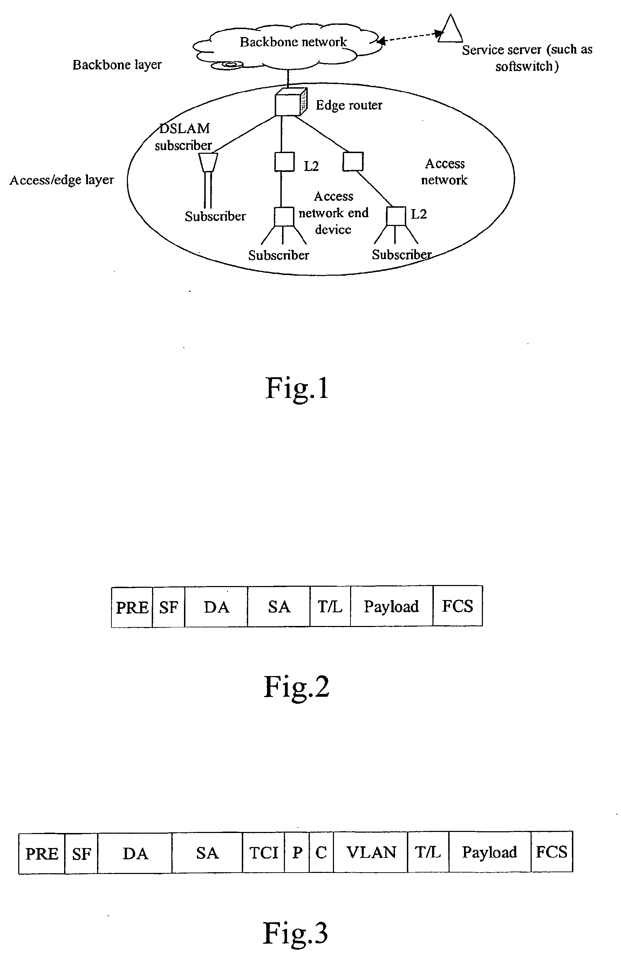

As shown in Fig.1, a whole IP network consists of access/edge layers and a backbone layer. The access/edge layer involving the network devices that are closest to the subscribers generally consists of low end switches, such as Layer 2 and Layer 3 switches, a Digital Subscriber Line Access Multiplexer (DSLAM) and an edge router. Subscribers of a broadband IP network of a telecommunication service provider or a company can access to the broadband access network through various ways such as XDSL/Ethernet etc. The broadband access network collects all traffic streams to the edge router connected to the backbone network. The edge router is responsible to route and forward traffic streams in this access network and manage accessed subscriber.

In IP network, in order to provide an end-to-end QoS for service requirements of subscribers, such as VoIP or video-telephone etc., it is necessary to provide end-to-end guaranteed QoS not only in IP backbone network, but also in access network.

Due to design ideas, in general there is no means for guaranteed QoS in prior IP network. In order to adapt the development of network applications, various methods for guaranteeing QoS have been proposed, including integrated service model and differentiated service model. But these methods relate to network layer technology and cannot be used for access network because the devices in access network are mainly located in link layer.

At present, there are two methods for providing an end-to-end guaranteed QoS for IP access network.

In the first prior method, a concept about priority of Ethernet frame is defined in IEEE Standard 802.1p protocol for Ethernet environment. In general, there is no priority definition for ordinary Ethernet frames, but in the 802.1p as well as the 802. 1q, four bytes are added in an Ethernet frame. Three bits among the four bytes are used to represent priority of the Ethernet frame. During sending the data packets which are required very high real-time ability, the host or switch will set the three added bits in MAC frame header to show the frame has high priority. In this way, when there is heavy data traffic at Ethernet switch, data packets with high priority will be forwarded first. Fig.2 shows a general Ethernet frame format, and Fig.3 shows an Ethernet frame format defined by 802.1q and 802. 1p protocols. As shown in Fig.2 and Fig.3, the TCI, P, C and VLAN fields are newly added in general Ethernet frame. Among these fields, the P field uses three bits to represent priority which can be set at 8 levels with 0-7.

In prior 802.1p protocol used for access network, the priority represented with three bits of P field is set based on port, Media Access Control (MAC) address or Virtual Bridged LANs (VLAN) information. The access network devices then make dispatching and forwarding operations according to the priority information.

Although the priority information can be set based on port, MAC address or VLAN information in the QoS process in prior 802.1p, the priority can only be associated with a subscriber and cannot with a specific service of a subscriber. Therefore, the requirement that different services should have different priorities cannot be satisfied. Besides, the network topology and resources cannot be obtained in this method, so it is impossible to determine whether a guaranteed QoS can be provided for a subscriber service based on the network resources.

At present, there is no QoS control mode for ATM DSLAM. In the second prior method, for a few ATM DSLAMs provided guaranteed QoS, a Permanent Virtual Circuit (PVC) from the Remote Terminal Unit (RTU) to the Broadband Access Server (BAS) for a special subscriber is established, or a PVC from the DSLAM to the BAS but tied with the user port is established. In this way, traffic streams can be transmitted with Constant Bit Rate (CBR) mode. Since a single subscriber uses the whole broadband, the QoS for subscriber service can be guaranteed at this segment of access network

The mode that a single subscriber uses the whole broadband is similar to the mode of a leased line. Although this mode can ensure QoS at a certain segment of access network for the subscriber, it is not suitable for being spread in access network with convergence characteristic and it can only provide guaranteed QoS for a few special subscribers. The mode of establishing PVC cannot make the network sources be shared. Accordingly, this method can only be used for special applications and cannot be commonly used in access network.

US 2003/0007622 A1 discloses a method for allocating network resources. In this document, service applying is processed by a gate controller which initiates a network edge device and a network interface unit to reserve and commit network resources. Reservation and commission of network resources is realized with RSVP, which is similar to Interserv mode. But this mode cannot be applied in an access network because most of the devices in an access network operate at a link layer and thus failure to implement network layer protocol such as RSVP.

WO 02/14979 relates to traffic queueing for a remote terminal DSLAM. In this document, an ATM switch which is capable of examining and selectively forwarding packets or frames based on higher layer information in the protocol stack is disposed. The switch enables segregation of upstream traffic by type and downstream aggregation of Intemet traffic together with traffic from a local vertical services domain.

US 2002/0087699 A1 relates to allocation and utilization of network resources. In this document, bandwidth broker, RSVP aggregation and LOAD control protocol are used to reserve and allocate network resources. Though being an improvement for Diffserv mode and Interserv mode, the technical scheme disclosed in this document is not suitable for applied in an access network due to adoption of network layer technique.

### Summary of the Invention

An object of the invention is to provide a method for providing services with guaranteed QoS in an access network.

According to the present invention there is provided a method as set out in claim 1. Preferred features of this aspect are set out in claims 2 to 10.

In this invention, the edge router can manage resources of an access network, and inform the access network end devices of the QoS requirement of the service, and then let the end devices make stream classification operations and QoS processes. When there are not enough resources for the service, the service request will be refused. In this way, the QoS of the working traffic streams can be guaranteed. The combination of the method according to the invention and the method for providing services with QoS in backbone network can provide end-to-end services with guaranteed QoS all over the network. The invention overcomes the disadvantages that the access network devices cannot identify services and cannot obtain the information about resources and manage resources so that QoS cannot be guaranteed in the prior art.

### Brief Description of the Drawings

Figure 1 shows the architecture of an IP network.
Figure 2 is a schematic diagram illustrating the format of a general Ethernet frame.
Figure 3 is a schematic diagram illustrating the format of an Ethernet frame defined by 802.1q and 802.1p protocols.
Figure 4 is a flowchart diagram of the invention.
Figure 5 shows the architecture of the IP network according to an embodiment of the invention.

### Detailed Description of the Invention

Referring to Fig.1, the prior networking mode for access network is not changed in the invention. A whole IP network consists of access/edge layers and a backbone layer. The access/edge layer involving the network devices that are closest to the subscribers generally consists of low end switches, such as Layer 2 and Layer 3 switches, a DSLAM and an edge router. Subscribers of an IP network of a telecommunication service provider or a company can access to the IP access network through various ways such as XDSL/Ethernet etc. The IP access network collects all traffic streams to the edge router connected to the backbone network. The edge router is responsible to route and forward traffic streams in this access network and manage accessed subscriber. An IP access network consists of multiple access networks logically, and each subscriber is managed by one of the access networks. The router of each access network is responsible for resource management and QoS control for access network in this access network. After traffic streams leave the access network, the IP backbone network is responsible for providing guaranteed QoS for the traffic streams.

An access network is defined as an access network area managed by an edge router. All subscribers in the access network area can access to the backbone network through the edge router. In term of function, access network devices in an access network can be divided into three types. The first type is edge routers, such as edge routers R1 and R2. As output devices of the access network, the edge routers are used to connect the access network and the backbone network. Meanwhile, they are the first IP hops for a user to access Internet. The second type is end devices of the access network which are the devices closest to the subscribers, such as DSLAM for XDSL access and L2 switch for LAN access. The devices of the third type are the network devices located between the devices of the first type and those of the second type. In practice, there can be the devices of the third type in the network or not. For XDSL, there may be no devices of the third type, and for LAN access, the devices of the third type are usually switches L2 and L3. For example, the access network area 1 is managed and connected to the backbone network through edge router R1, the subscriber 1 of access network 1 can access to the edge router R1 through switch L2-1 etc.

In this invention, the access network end devices should have the ability of accepting and processing QoS commands from the edge router and the ability of classifying traffic streams. Here, the access network end devices refer to the network devices at layer 2 or higher layer in access network which are the most closed to subscribers. Meanwhile, it is necessary for the end devices to identify traffic streams according to QoS parameters, to manage bandwidth and set priority.

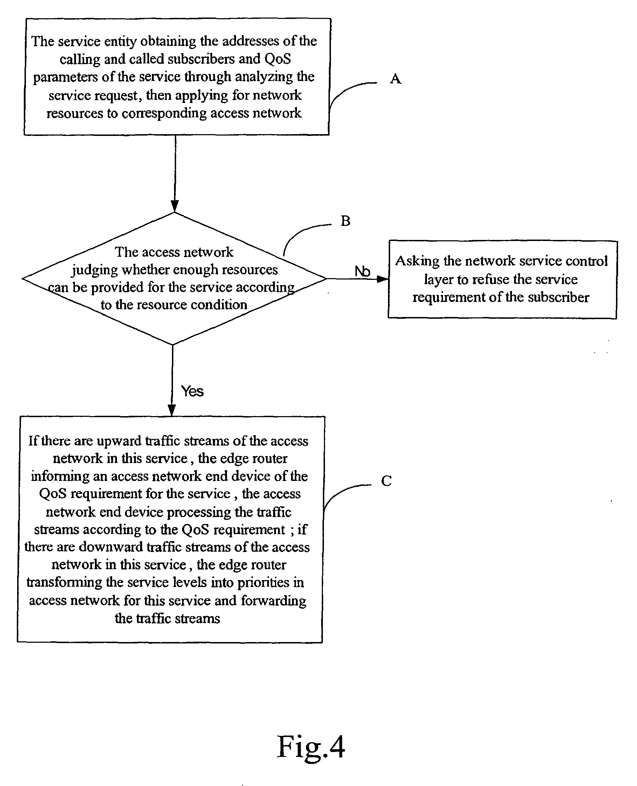

As shown in Fig. 4, the method according to the invention comprises the following steps.

In step A, the service entity at the network service control layer analyzes the service request with QoS requirement to obtain the addresses of the calling subscriber and the called subscriber and QoS parameters about this service, then applies to the corresponding access network of the IP access network for network resources.

If a subscriber in an access network wants to use a service with guaranteed QoS, such as VoIP call and video telephone call etc., the subscriber needs to submit a request to corresponding service entity. When the request has been received, the service entity judges the service rights of the subscriber and makes address analysis of the calling subscriber and the called subscriber. Then the service entity determines QoS parameters for this conversion, such as bandwidth etc., and applies for the necessary network resources to the edge router. The method of applying for network resources to edge router can be direct or indirect, such as through policy server, resource controller etc. The interface protocol used for resource application can be either an internal interface protocol or an open interface protocol depending upon the implementing method of providing guaranteed QoS in the backbone network.

The QoS parameters sent to the edge router from the service entity include, but not be limited to, bandwidth, directions of the traffic streams and parameters for identifying the traffic streams. The directions of service streams can be unidirectional (upward or downward) or bi-directional. According to the application environment, the parameters for identifying the traffic streams can be a five-element group (source/destination IP addresses, source/destination port numbers and protocol number), a four-element group (source/destination IP addresses, destination port number and protocol number) or a seven-element group.

In step B, the edge router of the access network judges whether the access network has the ability of providing enough resources for this service; if so, step C is executed, otherwise the edge router asks the network service control layer to reject the service request of the subscriber.

Having pre-planed resources and topology structure of the access network, the edge router obtains the information about network topology structure and bandwidth resources of each interface through static configuration or dynamic management protocol, and records the tying relationship between the subscriber identifier, such as IP address, allocated inside the access network and the end device of the access network. The bandwidth resource refers to the bandwidth of the Ethernet links for Ethernet and IP DSALM access mode, and refers to the bandwidth from DSLAM to BAS for ATM DSLAM access mode.

After receiving a resource request for the service, the edge router computes the bandwidth between the end devices of the access network and the edge router according to the relevant parameters of the service request. If there are not enough resources in the access network, the edge router will notify corresponding service entity to reject the service request. In contrast, if there are enough resources, the information will be sent back to corresponding service entity. After receiving the confirmation information from this service entity, the edge router will make corresponding processing according to the directions of traffic streams.

In step C, if the service has upward traffic streams in the access network, the edge router will inform the end devices of access network of the QoS parameters of the traffic streams, and the end devices will process the traffic streams based on the QoS parameters. If the service has downward traffic streams in the access network, the edge router will define priorities of the traffic streams in the access network and forward the traffic streams.

In detail, the edge router of the access network will make the following processes for traffic streams based on their directions.

For upward service streams, the edge router sends QoS commands involving QoS parameters to corresponding access network end devices in the access network through management protocol, and asks the access network end devices to process the traffic streams based on the QoS parameters. The QoS commands sent to the access network end devices include bandwidth and parameters for identifying traffic streams. According to the application environment, the parameters for identifying the traffic streams can be a five-element group (source/destination IP addresses, source/destination port numbers and protocol number), a four-element group (source/destination IP addresses, destination port number and protocol number) or a seven-element group. After having received the QoS parameters of traffic streams, the access network end devices set the items of stream classification table based on the parameters for identifying the traffic streams, implement stream classification for the upward traffic streams of subscriber, and then make corresponding processes based on the stream classification result. For the service streams that are matched with the stream classification table, the bandwidth management, such as bandwidth limitation, is processed according to bandwidth parameters. During forwarding the traffic streams for Ethernet access or IP DSLAM access, the packets are set with high priorities first and forwarded then. During forwarding the traffic streams for ATM DSLAM access, the service streams are sent on PVC with guaranteed QoS for further forwarding. In this way, since bandwidth of the PVC with guaranteed QoS is allocated according to the stream classification result, the bandwidth can be shared according to traffic streams of subscribers, which overcomes the disadvantage of the prior method that a single subscriber uses the whole bandwidth for guaranteeing QoS with CBR mode. The traffic streams that are not matched with the stream classification table will be processed as traffic streams without guaranteed QoS. During forwarding the traffic streams without guaranteed QoS for Ethernet access or IP DSLAM access, the packets are set with low priorities first and then forwarded, and for ATM DSLAM access, the traffic streams are sent to PVC with UBR mode for further forwarding.

For downward traffic streams, the edge router doesn't need to send relevant commands to access network end devices. If the priorities of the traffic streams can be determined trough the backbone network or the traffic streams themselves, the received traffic streams are set priorities in access network according to service levels of the traffic streams directly, and then forwarded. Otherwise, the edge router makes stream classification first, and then forwarding the traffic streams based on the priorities in access network after identifying traffic streams.

For the traffic streams with upward and downward directions, the edge router processes the traffic streams according to the processing of upward direction and that of downward direction respectively.

If the originator and the receiver are subscriber of the same access network, the service procedure is implemented separately according to the above-mentioned procedures.

Before receiving QoS commands from the edge router, access end devices deal with traffic streams from subscribers as a service without guaranteed QoS. That is, the access end devices forward the packets after setting low priorities to them first. For ATM DSLAM access, service streams are sent to PVC with UBR mode for further forwarding.

The devices of the third type located between the edge router and access end devices only forward IP packets according to their service levels.

After the subscriber terminates the service, if there are upward traffic streams, the access network end devices will receive QoS release commands from the edge router, and then cancel corresponding items of the stream classification table.

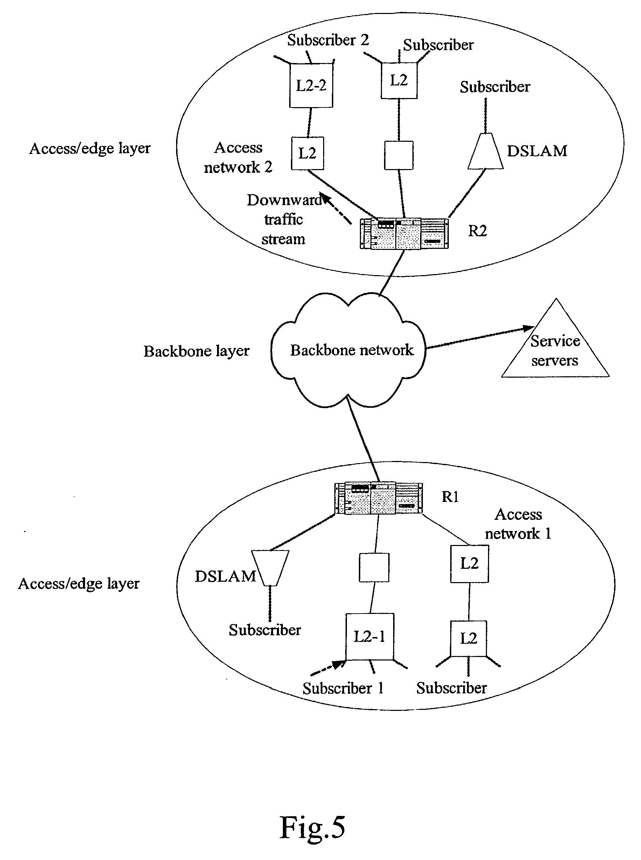

As shown in Fig.5, the subscriber 1 in access network 1 wants to send traffic streams with guaranteed QoS to the subscriber 2 in access network 2. First, the subscriber 1 sends out a service request, after analyzing the addresses of the subscribers 1 and 2, i.e., the addresses of the calling and called subscribers, and relevant QoS parameters, the service entity at network control layer applies for network resources from the access networks 1 and 2 for the service. The edge routers R1 and R2 determine whether enough resources can be provided for the service according the current resource situation of the access networks 1 and 2 respectively. If both the access networks 1 and 2 can provide enough resources, the edge routers R1 and R2 return the information to the service entities. After receiving confirmation messages from the service entities, the edge router R1 of the access network 1 sends QoS commands involving QoS parameters to the end device L2-1. According to the QoS parameters, the end device L2-1 sets items of stream classification table to making stream classification operations for the upward traffic streams of the subscriber 1, and matches the results of stream classification operations with the items of the stream classification table. The traffic streams matched with the items are managed and forwarded according to the bandwidth parameters. The unmatched traffic streams are processed as traffic streams without guaranteed QoS. At the same time, for the downward traffic streams, if their priorities can be obtained through methods for backbone network or traffic streams themselves, the edge router R2 of the access network 2 transforms the service levels of the traffic streams forwarded from the backbone network to priorities used in the access network without sending relevant commands to access network end devices, and then forwards the traffic streams to the end device L2-2 from which the subscriber 2 can receive the traffic streams. Otherwise, the edge router R2 makes stream classification operations first, and then forwards the traffic streams to the end device L2-2 from which the subscriber 2 can receive the traffic streams after identifying the traffic streams.

If the access network 1 or 2 cannot provide enough resources for the service, the corresponding edge router will notify the service entities to refuse the service request of subscriber 1.

If the traffic streams between subscribers 1 and 2 are bi-directional, it is necessary for the edge routers R1 and R2 not only to send QoS commands to the end devices L2-1 and L2-2 respectively, but also to forward the service streams received from the backbone network.

It can be seen from above that services with guaranteed QoS can be provided on a broadband access network with the method according to the invention. The end-to-end services with guaranteed QoS can be provided through the combination of the scheme for IP backbone network and the method according to the invention.

## Claims

1. A method for providing services with guaranteed Quality of Service (QoS) in an IP access network, comprising:
a. a service entity at a network service control layer obtaining addresses of a calling subscriber (1,2) and a called subscriber (1,2) and QoS requirement for a service through analyzing a service request, then applying for network resources of a corresponding access network;
b. an edge router (R1, R2) of the said access network judging whether enough resources can be provided for this service according to topology structure of the access network and bandwidth resources of each interface in the access network which are obtained in advance as well as a current resource condition,and if so, executing step c, otherwise rejecting the service request of the subscriber (1, 2); and
c. if there are upward traffic streams of the access network in this service,the said edge router (R1, R2) informing an access network end device of the QoS requirement for the service, the access network end device processing the said traffic streams according to the QoS requirement;
if there are downward traffic streams of the access network in this service, the said edge router (R1, R2) setting priority in access network for this service and forwarding the said traffic streams.

2. A method according to claim 1, wherein in step c, the said edge router (R1, R2) can transform the service levels into priorities in the access network for the received service streams and forward the said traffic streams; or can classify streams first, after identifying the traffic streams, transform the identified results into priorities in the access network and forward the traffic streams.

3. A method according to claim 1, wherein step c is executed after the said edge router has informed the service entity at network service control layer that the access network can provide enough resources for the service and has received confirmation from the service entity.

4. A method according to claim 1, wherein the topology structure of the access network and bandwidth resources of each interface are obtained through static configuration or dynamic management protocol.

5. A method according to claim 1, after the access network end device receives the QoS requirement of the service in step c, the method further comprises:
setting items of a stream classification table according to the parameters for identifying traffic streams in the QoS requirement;
classifying the received upward traffic streams of the subscriber (1,2); and
managing bandwidth according to bandwidth parameters for the service streams matched with the items of the stream classification table, and processing the other service streams as traffic streams without guaranteed QoS.

6. A method according to claim 5, wherein the step of forwarding the matched service streams by an end device comprises:
setting the service streams with high priorities and then forwarding the traffic streams for Ethernet access or IP Digital Subscriber Line Access Multiplexer (DSLAM) access; and
sending the traffic streams to Permanent Virtual Circuit (PVC) with guaranteed QoS for further forwarding for ATM DSLAM access.

7. A method according to claim 5, wherein the parameters for identifying traffic streams is one of a four-element group, a five-element group or a seven-element group.

8. A method according to claim 1, further comprising: before receiving QoS parameters from the edge router (R1, R2) of the access network for upward traffic streams, the end devices processing the received traffic streams from the subscriber (1,2) as service streams without guaranteed QoS.

9. A method according to claim 1, wherein the network devices between the said access network end devices and the said edge router (R1, R2) of the access network forward the traffic streams according to the priorities of the traffic streams.

10. A method according to any one of claims 5 to 7, further comprising: after the subscriber (1,2) terminates the service, if there are upward traffic streams, the said edge router sending a QoS release command, the access network end devices deleting corresponding items of the stream classification table according to the command parameters.

## Patentansprüche

1. Verfahren zur Bereitstellung von Diensten mit garantierter Dienstgüte (QoS) in einem IP-Zugangsnetzwerk umfassend:
a) eine Dienstinstanz auf einer Netzwerk-Dienststeuerungsschicht, die Adressen eines rufenden Teilnehmers (1, 2) und eines gerufenen Teilnehmers (1, 2) und einer QoS-Forderung für einen Dienst durch Analyse einer Dienstanforderung erlangt; dann Netzwerk-Ressourcen eines entsprechenden Zugangsnetzwerks beanträgt;
b) einen Edge-Router (R1, R2) des Zugangsnetzwerks, der beurteilt, ob für diesen Dienst genügend Ressourcen bereitgestellt werden können, gemäß der Topologiestruktur des Zugangsnetzwerks und der Bandbreitenressourcen jeder Schnittstelle im Zugangsnetzwerk, die im voraus erlangt werden, wie auch eines aktuellen Ressourcenzustandes, und wenn ja, Ausführen von Schritt c), andernfalls Abweisen der Dienstanforderung des Teilnehmers (1, 2); und
c) wenn es bei diesem Dienst Aufwärts-Verkehrsströme des Zugangsnetzwerks gibt, den Edge-Router (R1, R2), der eine Zugangsnetzwerk-Endvorrichtungs über die QoS-Forderungen für den Dienst informiert, wobei die Zugangsnetzwerk-Endvorrichtung die Verkehrsströme gemäß den QoS-Forderungen verarbeitet;
wenn es bei diesem Dienst Abwärts-Verkehrsströme des Zugangsnetzwerks gibt, den Edge-Router (R1, R2), der die Priorität im Zugangsnetzwerk für diesen Dienst setzt und die Verkehrsströme weiterleitet.

2. Verfahren nach Anspruch 1, wobei in Schritt c) der Edge-Router (R1, R2) die Dienstniveaus in Prioritäten im Zugangsnetzwerk für die empfangenen Dienstströme umwandeln und die Verkehrsströme weiterleiten kann; oder zuerst Ströme klassifizieren, nach der Identifizierung der Verkehrsströme die identifizierten Ergebnisse in Prioritäten im Zugangsnetzwerk umwandeln und die Verkehrsströme weiterleiten kann.

3. Verfahren nach Anspruch 1, wobei Schritt c) ausgeführt wird, nachdem der Edge-Router die Dienstinstanz auf der Netzwerk-Dienststeuerungsschicht informiert hat, daß das Zugangsnetzwerk genügend Ressourcen für den Dienst bereitstellen kann, und eine Bestätigung von der Dienstinstanz empfangen hat.

4. Verfahren nach Anspruch 1, wobei die Topologiestruktur des Zugangsnetzwerks und die Bandbreitenressourcen jeder Schnittstelle durch eine statische Konfiguration oder durch ein dynamisches Verwaltungsprotokoll erlangt werden.

5. Verfahren nach Anspruch 1, wobei, nachdem die Zugangsnetzwerk-Endvorrichtung die QoS-Forderungen des Dienstes in Schritt c) empfangen hat, das Verfahren ferner die folgenden Schritte umfaßt:
Setzen von Elementen einer Stromklassifizierungstabelle gemäß den Parametern für die Identifizierung von Verkehrsströmen in den QoS-Forderungen;
Klassifizieren der empfangenen Aufwärts-Verkehrsströme des Teilnehmers (1, 2); und
Verwalten der Bandbreite gemäß den mit den Elementen der Stromklassifizierungstabelle abgestimmten Bandbreiteparametem für die Dienstströme und Verwalten der anderen Dienstströme als Verkehrsströme ohne garantierte QoS.

6. Verfahren nach Anspruch 5, wobei der Schritt des Weiterleitens der abgestimmten Dienstströme durch ein Endvorrichtung die folgenden Schritte umfaßt:
Setzen der Dienstströme mit hohen Prioritäten und dann Weiterleiten der Verkehrsströme für Ethernet-Zugang oder IP-DSL-Zugangsmultiplexer-(DSLAM-)Zugang; und
Senden der Verkehrsströme an eine feste virtuelle Leitung (PVC) mit garantierter QoS zur weiteren Weiterleitung für ATM-DSLAM-Zugang.

7. Verfahren nach Anspruch 5, wobei die Parameter für die Identifizierung der Verkehrsströme eines von folgendem sind: eine Vier-Elemente-Gruppe, eine Fünf-Elemente-Gruppe oder eine Sieben-Elemente-Gruppe.

8. Verfahren nach Anspruch 1, ferner Folgendes umfassend: vor Empfang von QoS-Parameter vom Edge-Router (R1, R2) des Zugangsnetzwerks für Aufwärts-Verkehrsströme, durch die Endvorrichtungen erfolgendes Verarbeiten der empfangenen Verkehrsströme vom Teilnehmer (1, 2) als Dienstströme ohne garantierte QoS.

9. Verfahren nach Anspruch 1, wobei die Netzwerkvorrichtungen zwischen den Zugangsnetzwerk-Endvorrichtungenn und dem Edge-Router (R1, R2) des Zugangsnetzwerks die Verkehrsströme gemäß den Prioritäten der Verkehrsströme weiterleiten.

10. Verfahren nach einem der Ansprüche 5 bis 7, ferner Folgendes umfassend:
nachdem der Teilnehmer (1, 2) den Dienst beendet hat, wenn es Aufwärts-Verkehrsströme gibt, durch den Edge-Router erfolgendes Senden eines QoS-Freigabebefehls, wobei die Zugangsnetzwerk-Endvorrichtungen entsprechende Elemente der Stromklassifizierungstabelle gemäß den Befehlsparametern löschen.

## Revendications

1. Procédé pour fournir des services avec une Qualité de Service (QoS) garantie dans un réseau d'accès IP, comprenant :
a. une entité de service au niveau d'une couche de commande de service de réseau qui obtient des adresses d'un abonné appelant (1, 2) et d'un abonné appelé (1, 2) et une exigence de QoS pour un service par l'intermédiaire de l'analyse d'une requête de service, puis qui applique des ressources de réseau d'un réseau d'accès correspondant ;
b. un routeur de périphérie (R1, R2) dudit réseau d'accès qui juge si oui ou non suffisamment de ressources peuvent être fournies pour ce service conformément à une structure de topologie du réseau d'accès et à des ressources de largeur de bande de chaque interface dans le réseau d'accès qui sont obtenues à l'avance de même que conformément à une condition de ressource courante et s'il en est ainsi, qui exécute une étape c et qui, autrement, rejette la requête de service de l'abonné (1, 2) ; et
c. s'il y a des courants de trafic de liaison montante du réseau d'accès dans ce service, ledit routeur de périphérie (R1, R2) informe un dispositif d'extrémité de réseau d'accès de l'exigence QoS pour le service, le dispositif d'extrémité de réseau d'accès traitant lesdits courants de trafic conformément à l'exigence QoS ;
s'il y a des courants de trafic de liaison descendante du réseau d'accès dans ce service, ledit routeur de périphérie (R1, R2) établit une priorité dans un réseau d'accès pour ce service et renvoie lesdits courants de trafic.

2. Procédé selon la revendication 1, dans lequel, au niveau de l'étape c, ledit routeur de périphérie (R1, R2) peut transformer les niveaux de service selon des priorités dans le réseau d'accès pour les courants de service reçus et peut renvoyer lesdits courants de trafic ; ou peut classifier des courants en premier, après identification des courants de trafic, peut transformer les résultats identifiés selon des priorités dans le réseau d'accès et peut renvoyer les courants de trafic.

3. Procédé selon la revendication 1, dans lequel l'étape c est exécutée après que ledit routeur de périphérie a informé l'entité de service au niveau d'une couche de commande de service de réseau du fait que le réseau d'accès peut fournir suffisamment de ressources pour le service et a reçu une confirmation en provenance de l'entité de service.

4. Procédé selon la revendication 1, dans lequel la structure de topologie du réseau d'accès et les ressources de largeur de bande de chaque interface sont obtenues par l'intermédiaire d'une configuration statique ou d'un protocole de gestion dynamique.

5. Procédé selon la revendication 1, après que le dispositif d'extrémité de réseau d'accès reçoit l'exigence QoS du service au niveau de l'étape c, le procédé comprend en outre :
l'établissement d'éléments d'une table de classification de courants conformément aux paramètres pour identifier des courants de trafic selon l'exigence QoS ;
la classification des courants de trafic de liaison montante reçus de l'abonné (1, 2) ; et
la gestion d'une largeur de bande conformément à des paramètres de largeur de bande pour les courants de service en correspondance avec les éléments de la table de classification de courants et le traitement des autres courants de service en tant que courants de trafic sans QoS garantie.

6. Procédé selon la revendication 5, dans lequel l'étape de renvoi des courants de service en correspondance au moyen d'un dispositif d'extrémité comprend :
l'établissement des courants de service moyennant des priorités élevées puis le renvoi des courants de trafic pour un accès Ethernet ou un accès de Multiplexeur d'Accès de Ligne d'Abonné Numérique (DSLAM) IP ; et
l'envoi des courants de trafic sur un Circuit Virtuel Permanent (PVC) moyennant une QoS garantie pour un renvoi ultérieur pour un accès ATM DSLAM.

7. Procédé selon la revendication 5, dans lequel les paramètres pour identifier des courants de trafic sont un groupe pris parmi un groupe à quatre éléments, un groupe à cinq éléments et un groupe à sept éléments.

8. Procédé selon la revendication 1, comprenant en outre : avant la réception de paramètres QoS en provenance du routeur de périphérie (R1, R2) du réseau d'accès pour des courants de trafic de liaison montante, les dispositifs d'extrémité traitent les courants de trafic reçus depuis l'abonné (1, 2) en tant que courants de service sans QoS garantie.

9. Procédé selon la revendication 1, dans lequel les dispositifs de réseau entre lesdits dispositifs d'extrémité de réseau d'accès et ledit routeur de périphérie (R1, R2) du réseau d'accès renvoient les courants de trafic conformément aux priorités des courants de trafic.

10. Procédé selon l'une quelconque des revendications 5 à 7, comprenant en outre :
après que l'abonné (1, 2) termine le service, s'il y a des courants de trafic de liaison montante, ledit routeur de périphérie envoie une commande de libération de QoS, et les dispositifs d'extrémité de réseau d'accès suppriment des éléments correspondants de la table de classification de courants conformément aux paramètres de commande.
